# EUROPÄISCHE PATENTANMELDUNG

(11) **EP 1 944 850 A2**
(43) Veröffentlichungstag der Anmeldung: **16.07.2008**
(21) Anmeldenummer: 08100132.3
(22) Anmeldetag: 07.01.2008
(51) Int. Cl.: H02J 7/02, H04R 25/00

(54) **Ladevorrichtung für ein Hörgerät, Hörgerät und Hörgerätefernbedienung**

(30) Priorität: 10.01.2007 DE 102007001537
(71) Anmelder: Siemens Audiologische Technik GmbH, 91058 Erlangen (DE)
(72) Erfinder: Reithinger, Jürgen, 91077 Neunkirchen am Brand (DE)
(74) Vertreter: Maier, Daniel Oliver

(57) **Zusammenfassung**

Ein drahtlos ladbares Hörgerät bzw. eine entsprechende Hörgerätefernbedienung soll möglichst klein ausgebildet werden können. Hierzu ist erfindungsgemäß ein Influenzladeverfahren vorgesehen, wobei ein Ladegerät (19) mit einem Ladekondensator (10) ausgestattet wird, der zwei gegenüberliegende Elektroden bzw. Platten (11,12) besitzt. Das zu ladende Gerät (13), ein Hörgerät oder eine Hörgerätefernbedienung, wird zwischen die beiden Elektroden (11,12) in das elektrische Feld des Kondensators (10) eingebracht. Zur Energieeinkopplung ist das zu ladende Gerät (13) selbst mit einem Kondensator (17) ausgestattet, der in Abhängigkeit des elektrischen Felds Influenzladungen ausbildet. Der Kondensator (17) im Hörgerät bzw. der Hörgerätefernbedienung kann sehr raumsparend aus Folien oder Beschichtungen hergestellt werden, so dass gegenüber magnetischen Empfangsspulen für das induktive Laden deutlich Bauraum eingespart werden kann.

## Beschreibung

Die vorliegende Erfindung betrifft eine Ladevorrichtung für ein Hörgerät und/oder eine Hörgerätefernbedienung mit einer Spannungsversorgungseinrichtung zur Bereitstellung einer Ladespannung bzw. eines Ladestroms. Darüber hinaus betrifft die vorliegende Erfindung ein Hörgerät oder eine Hörgerätefernbedienung, das/die mit der obigen Ladevorrichtung bzw. dem obigen Ladeverfahren geladen werden kann.

Häufig besteht der Bedarf, Akkumulatoren eines Hörgeräts bzw. einer Hörgerätefernbedienung nicht mittels eines Drahtanschlusses, sondern ohne direkte Kabelverbindung zu laden. Die Ladeenergie muss also drahtlos von einer Ladestation zu dem Hörgerät bzw. der Hörgerätefernbedienung übertragen werden. Hierfür muss in dem zu ladenden Gerät eine Energie-Empfangsschaltung mit zugehöriger Empfängerkomponente (z. B. Antenne) integriert werden. Dazu wird einerseits Platz benötigt, aber andererseits ist durch die drahtlose Übertragung der Energie an dem zu ladenden Gerät kein Ladeanschlusskontakt notwendig.

Bislang wurde für drahtloses Laden von Akkus typischerweise das induktive Verfahren benutzt. Der Sender arbeitet mit einer Sendespule und der Empfänger der Energie verwendet ebenfalls eine Spule zur Aufnahme der Energie. Derartige Spulen sind verhältnismäßig groß und die Energie wird über schlecht nach außen abschirmbare, magnetische Felder übertragen. Allerdings können durch die induktive Übertragung relativ große Ströme in der Energie-Empfangsspule erzeugt werden.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO) und In-dem-Ohr-Hörgeräte (IdO), z.B. auch Concha-Hörgeräte oder Kanal-Hörgeräte (CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

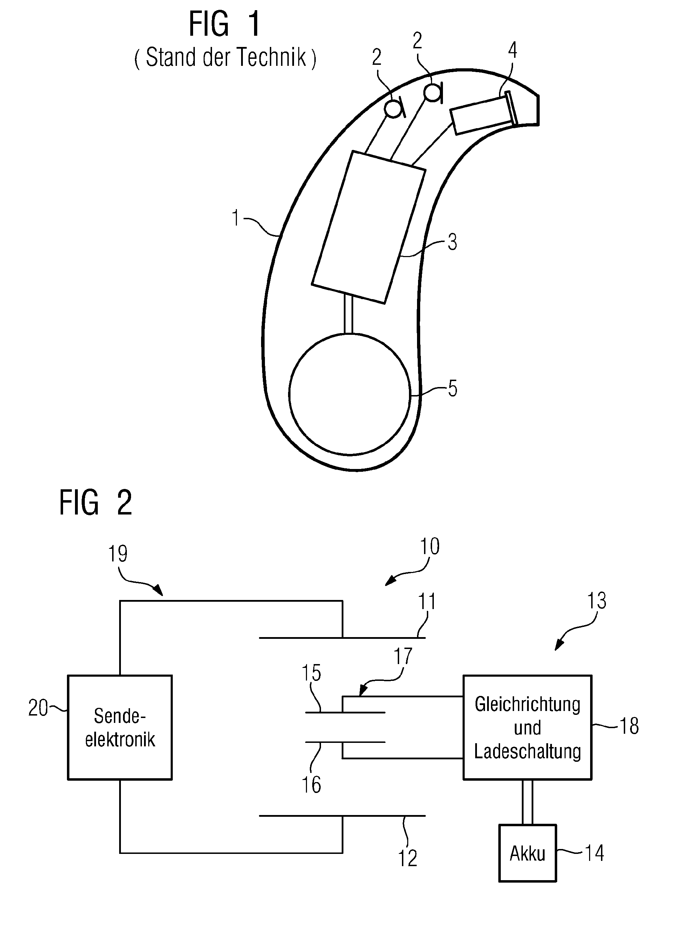

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Stromversorgung des Hörgeräts und insbesondere die der Signalverarbeitungseinheit 3 erfolgt durch eine ebenfalls ins Hörgerätegehäuse 1 integrierte Batterie 5.

In der Druckschrift GB 2 198 601 A1 ist ein nachladbarer Speicher beschrieben, umfaßend Batteriezellen oder Kondensatoren. Der Speicher weist Elektroden auf, welche an Elektroden einer Wechselstrom-Hochfrequenzaufladequelle kapazitiv gekoppelt sind. Mittels Dioden, die an die Elektroden gekoppelt sind, wird der Speicher durch die positiven und negativen Halbwellen des Ladestroms geladen.

Die Aufgabe der vorliegenden Erfindung besteht darin, ladbare Hörgeräte und Hörgerätefernbedienungen kleiner zu gestalten und daher eine entsprechende Ladevorrichtung bzw. ein entsprechendes Ladeverfahren bereitzustellen. Darüber hinaus sollen hierfür geeignete Hörgeräte oder Hörgerätefernbedienungen angegeben werden.

Die vorliegende Erfindung beruht auf dem Gedanken, für ein Hörgerät oder eine Hörgerätefernbedienung ein Influenzladeverfahren, d. h. ein kapazitives Ladeverfahren, zu verwenden, auch wenn dabei nur eine geringe Energieübertragungsrate erzielt werden kann, denn die Vorteile eines derartigen Verfahrens sind für Hörgeräte und Hörgerätefernbedienungen besonders ausschlaggebend. Es müssen nämlich für das drahtlose Laden keine voluminösen Spulen eingesetzt werden, sondern es können Kondensatoren mit verhältnismäßig wenig Bauraum für das Laden Verwendung finden.

Dementsprechend ist vorgesehen eine Ladevorrichtung für ein Hörgerät und/oder eine Hörgerätefernbedienung mit einer Spannungsversorgungseinrichtung zur Bereitstellung einer Ladespannung, und einem Kondensator mit zwei gegenüberliegenden Elektroden, wobei ein Hörgerät oder eine Hörgerätefernbedienung zwischen die beiden Elektroden in das elektrische Feld des Kondensators einbringbar ist. Der Kondensator der Ladevorrichtung weist als Elektroden mindestens vier Platten auf, die sich paarweise gegenüberstehen.

Dazu passend wird ferner bereitgestellt ein Hörgerät oder Hörgerätefernbedienung mit einem Gehäuse und einem Energiespeicher, wobei in oder an dem Gehäuse ein Kondensator oder ein Teil eines Kondensators angeordnet ist, der zum Laden des Energiespeichers durch ein externes elektrisches Feld dient. Das Gehäuse ist zumindest teilweise mit einer leitfähigen Folie oder Beschichtung versehen. Eine derartige Folie lässt sich leicht auf das Gehäuse bzw. an die Gehäuseinnenfläche applizieren. Die Beschichtung lässt sich ohne Aufwand raumsparend beispielsweise an der Innenfläche des Gehäuses aufbringen. Alternativ bildet bei dem erfindungsgemäßen Hörgerät bzw. der entsprechenden Hörgerätefernbedienung eine Elektrode des Energiespeichers eine Kondensatorelektrode. Gegebenenfalls bildet zumindest ein Teil von dem Gehäuse die andere Elektrode des Ladekondensators. Auch hierdurch ist eine deutliche Platzeinsparung möglich.

Bei einer speziellen Ausgestaltung der Ladevorrichtung kann der Kondensator auch sechs Platten aufweisen, die würfelförmig angeordnet sind. Damit ist es wenig kritisch, mit welcher Orientierung das zu ladende Gerät in die Ladevorrichtung eingebracht wird.

Vorzugsweise ist der Kondensator Teil eines LC-Schwingkreises. Hierdurch lässt sich eine verhältnismäßig hohe Energieübertragungsrate erzielen. Besonders günstig kann es sein, wenn das Gehäuse ganz oder teilweise mit zumindest zwei leitfähigen Folien versehen ist, zwischen die ein Isolator eingeklebt ist. Dadurch kann sehr raumsparend ein vollständiger Kondensator bereitgestellt werden.

Die vorliegende Erfindung ist anhand der beigefügten Zeichnungen näher erläutert, in denen zeigen:
- FIG 1: den prinzipiellen Aufbau eines Hörgeräts und
- FIG 2: ein Schaltdiagramm eines Influenzladesystems gemäß der vorliegenden Erfindung.

Die nachfolgend näher geschilderten Ausführungsbeispiele stellen bevorzugte Ausführungsformen der vorliegenden Erfindung dar.

Die Energieübertragung von einem Ladegerät zu einem Hörgerät bzw. einer Hörgerätefernbedienung kann statt mit einem magnetischen Feld auch über ein elektrisches Feld erfolgen. Damit wird in dem Ladegerät anstelle einer Sendespule ein Sendekondensator 10 notwendig, wie dies in FIG 2 dargestellt ist. Dieser Kondensator 10 besteht aus zwei sich gegenüberliegenden Platten 11 und 12, zwischen denen das zu ladende Gerät 13 mit seinem integrierten Akku 14 positioniert wird. Dieses Gerät 13, nämlich ein Hörgerät oder eine Hörgerätefernbedienung, besitzt ebenfalls zwei Platten 15, 16, die einen Kondensator 17 bilden. Der Kondensator 17 ist über eine Gleichrichtungs- und Ladeschaltung 18 mit dem Akku 14 verbunden, um diesen zu laden. Darüber hinaus ist der Kondensator 10 des Ladegeräts 19 an eine Sendeelektronik 20 angeschlossen, um die entsprechende Ladeenergie mit Hilfe eines Wechselstroms bzw. einer Wechselspannung zur Verfügung zu stellen.

Beim Laden wird zwischen den Platten 11, 12 des Ladegeräts 19 ein elektrisches Feld aufgebaut. In diesem elektrischen Feld bauen nun die Platten 15, 16 des zu ladenden Geräts Influenzladungen auf. Wenn das elektrische Feld die Polarität wechselt, dann wechselt auch die Influenzladung auf den Platten 15, 16, vorausgesetzt, dass ein Stromfluss zwischen den Platten möglich ist. Dadurch wird ein Wechselstrom zwischen den Platten 15, 16 erzeugt, der über die Schaltung 18 gleichgerichtet und zum Laden des Akkus 14 verwendet werden kann.

Die Spannung an den Platten 15, 16 ergibt sich aus der Stärke des elektrischen Felds und der Größe der Platten. Der von den Platten 15, 16 abnehmbare Strom resultiert aus der Spannung und der Frequenz des elektrischen Feldes.

Die Kondensatorplatten 15, 16 in dem zu ladenden Gerät 13 können entweder als Metallplatten, als leitfähige flexible Folien oder als leitfähige Beschichtungen auf nicht leitfähigen Oberflächen (z. B. Gehäuse) ausgeführt sein. Auch vorhandene, metallische Flächen können zumindest für eine der beiden nötigen Platten verwendet werden. So kann beispielsweise die Metallfläche eines Knopfzellenakkus als eine Platte verwendet werden. Nachteil dabei ist allerdings, dass nur noch eine Halbwellengleichrichtung möglich ist statt einer Vollwellengleichrichtung.

Bei einem Hinter-dem-Ohr-Hörgerät kann auch eine bereits vorhandene Metallbeschichtung der Gehäuseinnenseite als Kondensator verwendet werden. Es ist in diesem Fall lediglich sicherzustellen, dass die Beschichtungen der beiden Gehäusehälften sich nicht direkt berühren. Folglich ist ein entsprechender kleiner Spalt zwischen den beiden Gehäusehälften vorzusehen. Die Kontaktierung der Beschichtung kann beispielsweise über einfache Federkontakte stattfinden.

Die Ladeelektronik bzw. Ladeschaltung 18 kann entweder in dem zu ladenden Gerät 13 integriert sein oder es wird in dem Gerät nur die Ladespannung und der Ladestrom gemessen, um den Ladevorgang zu steuern. Die gemessenen Werte können beispielsweise über eine Funkschnittstelle zum Ladegerät 19 übertragen werden. Dort kann dann das erzeugte Feld entsprechend gesteuert werden.

Wird das Ladegerät 19 hinsichtlich des Aufbaus des Kondensators 10 als Würfel ausgeführt, so können drei Plattenpaare diesen Würfel bilden. Wenn nun die drei Plattenpaare jeweils abwechselnd angesteuert werden, dann können die Empfangsplatten 15, 16 des zu ladenden Geräts 13 in beliebiger Ausrichtung innerhalb des Würfels liegen. Die empfangene Energie schwankt dann lediglich zwischen 50 % im ungünstigsten Fall und 100 % im günstigsten Fall.

Wird im Ladegerät 19 ein LC-Schwingkreis für die Verschaltung des bzw. der Sendekondensatoren 10 verwendet, kann die Energie sehr effizient übertragen werden, da dann nur noch wenig Wirkleistung zugeführt werden muss, die den Verlusten und der Ladeenergie entspricht.

In vorteilhafter Weise ist bei der Verwendung elektrischer Felder für die Energieübertragung die Abschirmung dieser Felder nach außen relativ einfach zu realisieren. Eine Metallbox reicht in der Regel hierfür vollkommen aus. Demgegenüber ist für den Fall einer induktiven Übertragung eine Abschirmung eines magnetischen Feldes nach außen verhältnismäßig schwierig.

Ein weiterer Vorteil des erfindungsgemäßen Influenzladesystems besteht in dem geringen Bauraumbedarf. Gerade bei Hörgeräten, bei denen der für die Bauelemente benötigte Platz eine große Rolle spielt, kann eine Spule für den Energieempfang zu erheblichen Platzproblemen führen. Es kann daher nicht in jedem Hörgerät eine Energieempfangsspule eingesetzt werden. Kondensatorplatten hingegen können sehr dünn und damit sehr platzsparend realisiert werden. Es genügen unter Umständen dünne Metallbeschichtungen von Hörgeräte- bzw. Gehäusekomponenten. Elektrisch leitfähige Folien können ebenfalls verwendet werden und sind besonders bei unregelmäßigen Oberflächen von Vorteil. Speziell bei In-dem-Ohr-Hörgeräten können solche Folien für den Ladekondensator sehr flexibel in die individuellen Gehäuseschalen eingelegt werden. Ebenso können auch zwei Folien mit einem dazwischen geklebten Isolator als verformbarer Kondensator realisiert werden. In diesem Fall entfällt das Risiko eines Kurzschlusses zwischen den beiden Platten.

Gerade kleine Geräte wie Hörgeräte benötigen keine allzu gro-βen Akkus. Damit ist die zweifellos höhere Energieübertragung über magnetische Felder nicht nötig. Mit kleinen Platten und genügend hohen Feldfrequenzen für das elektrische Feld lassen sich nämlich ausreichend hohe Energiemengen für kleine Akkus übertragen. Bei geeigneter Sendeelektronik des Ladegeräts kann eine handelsübliche Primärbatterie für das Ladegerät ausreichen, um einen kleinen Knopfzellenakku eines Hörgeräts drahtlos zu laden.

## Patentansprüche

1. Ladevorrichtung für ein Hörgerät und/oder eine Hörgerätefernbedienung mit
- einer Spannungsversorgungseinrichtung (20) zur Bereitstellung einer Ladespannung, und
- einem Kondensator (10) mit zwei gegenüberliegenden Elektroden (11, 12), wobei das Hörgerät oder die Hörgerätefernbedienung zwischen die beiden Elektroden (11, 12) in das elektrische Feld des Kondensators (10) einbringbar ist,
**dadurch gekennzeichnet, dass**
- der Kondensator (10) als Elektroden mindestens vier Platten aufweist, die sich paarweise gegenüberstehen.

2. Ladevorrichtung nach Anspruch 1, wobei der Kondensator (10) sechs Platten aufweist, die würfelförmig angeordnet sind.

3. Ladevorrichtung nach einem der vorhergehenden Ansprüche, wobei der Kondensator (10) Teil eines LC-Schwingkreises ist.

4. Hörgerät oder Hörgerätefernbedienung mit
- einem Gehäuse (1) und
- einem Energiespeicher (5, 14),
- in oder an dem Gehäuse (1) ein Kondensator (17) oder ein Teil eines Kondensators angeordnet ist, der zum Laden des Energiespeichers (5, 14) durch ein externes elektrisches Feld dient,
**dadurch gekennzeichnet, dass**
- das Gehäuse (1) zumindest teilweise mit einer leitfähigen Folie oder Beschichtung versehen ist oder, dass
- eine Elektrode des Energiespeichers (5, 14) zusammen mit einer weiteren Metallfläche den Kondensator (17) bilden.

5. Hörgerät oder Hörgerätefernbedienung nach Anspruch 4, wobei das Gehäuse (1) zumindest teilweise mit zwei leitfähigen Folien versehen ist, zwischen die ein Isolator eingeklebt ist.
